# EUROPÄISCHE PATENTSCHRIFT

(11) **EP 0 585 736 B1**
(45) Veröffentlichungstag und Bekanntmachung des Hinweises auf die Patenterteilung: **27.03.1996**
(21) Anmeldenummer: 93113220.3
(22) Anmeldetag: 18.08.1993
(51) Int. Cl.: B62K 7/00, B62K 5/08

(54) **Lastentransportfahrzeug**
Load transporting vehicle
Véhicule pour le transport de charges

(30) Priorität: 31.08.1992 DE 4228994
(43) Veröffentlichungstag der Anmeldung: 09.03.1994
(73) Patentinhaber: Schramm, Siegfried, D-31180 Giesen (DE)
(72) Erfinder: Schramm, Siegfried, 31180 Giesen (DE); Kellner, Willi, D 32105 Bad Salzuflen (DE)
(74) Vertreter: Leissler-Gerstl, Gabriele

(56) Entgegenhaltungen:
- DE-A- 3 700 216
- DE-U- 9 115 026
- US-A- 1 661 257
- US-A- 4 132 435
- US-A- 5 011 169

## Beschreibung

Die Erfindung betrifft ein Lastentransportfahrzeug, insbesondere Lastenttransportfahrrad, bei dem ein hinterer Antriebsteil einen das Transportgut aufnehmenden vorderen Lastenträgerteil schiebt, wobei der hintere Antriebsteil einen Rahmen, ein daran angeordnetes Antriebsrad, einen Antriebsmechanismus für den Antrieb des Antriebsrades und einen von dem Rahmen getragenen Fahrersitz bzw. Sattel umfaßt und der vordere Lastenträgerteil ein Fahrgestell, Zwei koaxial daran angeordnete Hauptlaufräder, eine vom Fahrersitz aus vom Fahrer erreichbare Lenkbetätigungsvorrichtung und einen Lastenträgeraufbau zur Aufnahme des Transportgutes sowie wenigstens ein gegenüber der Achse der Hauptlaufräder in Fahrtrichtung versetzt angeordnetes und zwecks Anspassung an Fahrtrichtungsänderungen schwenkbar gelagertes Stützlaufrad aufweist, und wobei der vordere Lastenträgerteil mit dem hinteren Antriebsteil über eine Steuerkopfgelenkanordnung schwenkbeweglich um eine Steuerachse verbunden ist.

Ein derartiges Lastentransportfahrzeug ist beispielsweise aus der DE 33 03 218 A1 bekannt. Das bekannte Fahrzeug ist als Lastentransportfahrrad ausgebildet, bei dem der hintere Antriebsteil im wesentlichen dem eines üblichen Zweirades entspricht und einen Rahmen, einen darauf angeordneten Sattel und ein über einen pedalbetriebenen Tretlagermechanismus angetriebenes Antriebsrad aufweist. Der vordere Lastenträgerteil ist ein abnehmbar mit dem Rahmen des Antriebsteiles gekoppelter und im abgekoppelten Zustand unabhängig von dem hinteren Antriebsteil fahrbarer Wagen. Gemäß der DE 33 03 218 A1 wird vorgeschlagen, den vorderen Lastenträgerteil als Rollstuhl für den Transport von behinderten Menschen oder als ein nach Art eines Rollstuhls fahrbares Transportbehältnis für den Transport von Sachen auszubilden. Im angekoppelten Zustand ist der Wagen zwangsweise in einer Kippstellung arretiert, in der die Stützsräder vom Boden abgehoben sind. Dabei ist das gesamte Fahrgestell und der damit verbundene Lastenträgeraufbau des vorderen Lastenträgerteils um die Achse der Hauptlaufräder gekippt.

Aus der DE 37 24 242 A1 ist ein Rollstuhlfahrrad bekannt, das im wesentlichen die bereits genannten und aus der DE 33 03 218 bekannten Merkmale umfaßt. Darüberhinaus ist der gesamte Rahmen des vorderen Rollstuhlteils mittels einer Gelenkverbindung um eine im wesentlichen horizontale Kippachse schwenkbar gelagert und in einer Kippstellung arretierbar, in der die Stützlaufräder vom Boden abgehoben sind. Nur in dieser Kippstellung erfolgt eine stabile Verriegelung des Rollstuhls mit dem Fahrradantriebsteil für den Fahrbetrieb. Der Rollstuhl wird aus der arretierten Kippstellung freigegeben und somit auch über seine Stützlaufräder am Boden abgestützt, damit eine behinderte Person bei stehendem Fahrzeug mühelos in den Rollstuhl einsteigen bzw. aus dem Rollstuhl aussteigen kann. Ein Fahrbetrieb ist nicht möglich, wenn bei dem bekannten Fahrzeug der Rollstuhl aus seiner arretierten Kippstellung freigegeben ist.

Der Erfindung liegt das technische Problem zugrunde, ein Lastentransportfahrzeug der Eingangs genannten Art zu realisieren, daß einen großen Einsatzbereich bei vergleichsweise hohem Fahrkomfort aufweist.

Dieses Problem wird erfindungsgemäß durch die Kombination der Merkmale des Anspruchs 1 gelöst.

Das Lastentransportfahrzeug nach der Erfindung zeichnet sich gegenüber dem bereits erörterten, bekannten Stand der Technik insbesondere insbesondere dadurch aus, daß der Lastenträgeraufbau relativ zu dem Fahrgestell des vorderen Lastenträgerteils um eine im wesentlichen parallel zur Achse der Hauptlaufräder liegende Kippachse schwenkbar gelagert ist und das gegenüber der Kippachse und gegenüber der Achse der Hauptlaufräder in Fahrtrichtung versetzt angeordnete Stützlaufrad umfaßt, über das er sich zusätzlich -und zwar auch während der Fahrt des Lastentransportfahrzeugs- am Boden abstützen kann.

Es hat sich gezeigt, daß das Lastentransportfahrzeug nach der Erfindung auch bei hohen Transportlasten sehr gut beherrschbar bleibt. Das Stützlaufrad bzw. die Stützlaufräder entlasten die Hauptlaufräder, so daß eine -insbesondere bei hohen Transportlasten bedeutsame- günstige Gewichtsverteilung realisierbar ist. Darüberhinaus bildet der Lastenträgeraufbau auf dem Fahrgestell eine Art Wippe, so daß das vorzugsweise in Fahrtrichtung weit vorn an dem Lastenträgeraufbau angeordnete Stützlaufrad aufgrund des Schwenkfreiheitsgrades des Lastenträgeraufbaus Bodenunebenheiten folgen bzw. ausweichen kann, um Stöße auf das Fahrzeug und das Transportgut weitgehend zu absorbieren.

Das Lastentransportfahrzeugs nach der Erfindung bietet insbesondere im Hinblick auf die Transportierbarkeit vergleichsweise schwerer Transportgüter einen erweiterten Einsatzbereich bei relativ großem Fahrkomfort für den Fahrer.

Es wird insbesondere vorgeschlagen, das erfindungsgemäße Lastentransportfahrzeug als Lastentransportfahrrad ggf. mit Hilfsmotor auszubilden. Ein solches, insbesondere auch aus Gründen des Umweltschutzes interessantes Fahrzeug kann bei entsprechender Steifigkeit der Konstruktion ohne weiters für den Transport von Lasten herangezogen werden, die bisher zumutbar nur mit dem konventionellen Automobil oder entsprechenden Kraftfahrzeugen transportierbar waren, etwa Lasten von 100 kg und größer. Ein derartiges Lastentransportfahrzeug nach der Erfindung bleibt auch bei solch hohen Transportlasten gut steuerbar.

Gemäß einer besonders bevorzugten Weiterbildung der Erfindung ist der vordere Lastenträgerteil als abnehmbar mit dem hinteren Antriebsteil gekoppelter und im abgekoppelten Zustand unabhägig von dem Antriebsteil fahrbarer Wagen ausgebildet. Somit können Transportgüter mit dem abgekoppelten und somit gegenüber dem Gesamtfahrzeug weniger sperrigen Lastenträgerteil i. a. bis zu ihrem unmittelbaren Bestimmungsort, beispielsweise in Gebäuden, transportiert werden. Der Lastenträgerteil kann zu diesem Zweck z. B. so bemessen werden, das er in übliche Fahrstühle hineinpaßt, so daß mit ihm auch Räume in oberen Gebäudestockwerken erreichbar sind. Als Kopplungsmechanismen kommen insbesondere Scharniervorrichtungen in Frage, die das betriebsmäßige Ankoppeln bzw. Abkoppeln des Lastenträgerteils an bzw. von dem Antriebsteil mit wenigen Handgriffen ermöglichen.

Gemäß einer weiteren Ausführungsform der Erfindung ist der Lastenträgeraufbau in einer Kippstellung verrastbar, in der das Stützlaufrad vom Boden abgehoben ist. Durch die wahlweise einstellbare Kippstellung des Lastenträgerteiles ist die Möglichkeit gegeben, auch mit angehobenen Stützrädern zu fahren. Die Kippstellung wird für Fahrten ohne Transportlast oder mit kleineren Transportlasten empfohlen. Es hat sich gezeigt, daß das Fahrzeug bei höheren Geschwindigkeiten und unbelastetem bzw. allenfalls gering belastetem Lastenträgeraufbau dann ein günstigeres Fahrverhalten aufweist, wenn das Stützlaufrad vom Boden abgehoben ist. Unter Belastung des Lastenträgeraufbaus ergibt sich jedoch regelmäßig ein besseres Fahrverhalten, wenn der Lastenträgeraufbau aus seiner arretierten Kippstellung freigegeben ist und sich auch über das Stützlaufrad abstützen kann.

Die vorstehend erläuterten Fahrbetriebszustände sind frei wählbar, so daß bei einer Transportfahrt mit Unterstützung des Stützlaufrades- und bei einer "Leerfahrt" mit angehobenem Stützlaufrad und vergleichsweise höherer Geschwindigkeit gefahren werden kann.

Gemäß einer weiteren Ausführungsform ist ein Mechanismus vorgesehen, der das Stützlaufrad -insbesondere nach Maßgabe der Kippbewegung des Lastenträgeraufbaus- um eine im wesentlichen parallel zur Achse der Hauptlaufräder liegende Achse in Richtung auf einen mittleren Bereich des Lastenträgerteils nach oben verschwenkt, wenn der Lastenträgeraufbau in die Kippstellung bewegt wird, und der das Stützlaufrad wieder in die Ausgangsstellung zurückbewegt, wenn der Lastenträgeraufbau aus der Kippstellung heraus zurückbewegt wird.

Durch diese Maßnahme wird verhindert, daß das vorzugsweise weit vorn angeordnete Stützlaufrad in der Kippstellung nach vorn über andere Fahrzeugteile hinaus absteht. Ferner kann durch die von der Kippbewegung des Lastenträgeraufbaus abhängige zusätzliche Verschwenkbarkeit des Stützlaufrades relativ zu den sonstigen Elementen des Lastenträgeraufbaus eine noch weitergehende Stoßdämpfwirkung realisiert werden.

Es wird ferner vorgeschlagen das Fahrgestell über eine Federung bzw. eine Stoßdämpfervorrichtung an den Hauptlaufrädern abzustützen, wodurch der Fahrkompfort weiter vergrößert werden kann.

Gemäß einer Ausführungsform der Erfindung ist der Lastenträgeraufbau in einer Stellung verrastbar, in der er sich auch über das Stützlaufrad am Boden abstützen kann. Diese Ausführungsform betrifft insbesondere ein erfindungsgemäßes Lastentransportfahrzeug, bei dem der vordere Lastenträgerteil von dem hinteren Antriebsteil betriebsmäßig abkoppelbar ist. Die genannte Raststellung mit am Boden abstützendem Stützlaufrad kann beispielsweise dann vorteilhaft sein, wenn der abgekoppelte Lastenträgerteil von Menschenhand geschoben wird.

Der Lastenträgeraufsatz weist gemäß einer Ausführungsform der Erfindung eine Lastenträgerplattform mit Lastensicherungselementen, beispielsweise in Form von Seitenwänden auf.

Der Lastenträgeraufbau ist somit universell für die Aufnahme verschiedenster Güter geeignet. Die Lastenträgerplattform und die Sicherungselemente sind zweckmäßigerweise derart ausgestaltet, daß sie insbesondere standardisierte Transportgutbehälter und dergleichen sicher aufnehmen und fixieren können.

Gemäß einer weiteren Ausführungsform der Erfindung umfaßt der Lastenträgeraufbau wenigstens einen Sitz für eine zu transportierende Person. In dieser Ausgestaltung kann der vordere Lastenträgerteil beispielsweise als ein von dem Antriebsteil abkoppelbarer Rollstuhl ausgebildet sein.

In einer weiteren Ausgestaltung umfaßt der Lastenträgeraufbau einen insbesondere abnehmbar fixierten Einkaufskorb. Diese Ausgestaltung betrifft vorzugsweise den Fall, daß der Lastenträgerteil betriebsmäßig von dem Antriebsteil abkoppelbar ist. Der Lastenträgerteil kann dann im abgekoppelten Zustand als Einkaufswagen in ein Geschäft mitgeführt werden und den Einkauf erleichtern. Damit würde beispielsweise das oft lästige Umladen von Waren von einem konventionellen Supermarkt-Einkaufswagen in Tragetaschen oder dergleichen hinfällig, da der Abtransport der eingekauften Waren mit dem Lastenträgerteil erfolgen kann. Insbesondere zum Zwecke kleinerer Einkäufe kann der Einkaufskorb in einer Variante der genannten Ausführungsform der Erfindung separat von dem Lastenträgerteil abgenommen werden. Dabei erübrigt sich das Abkoppeln und Ankoppeln des Lastenträgerteils von dem Antriebsteil bzw. an den Antriebsteil.

Vorzugsweise ist die Steuerkopfgelenkvorrichtung derart angeordnet, daß die Steuerachse in Fahrtrichtung nach vorn geneigt ausgerichtet ist, so daß ein negativer Steuerkopfwinkel vorliegt. Dadurch wird erreicht, daß sich der hintere Antriebsteil bei einer Kurvenfahrt zwangsläufig in eine erwünschte Kurvenfahrtlage neigt. Auf diese Weise bleibt das Lastentransportfahrzeug nach der Erfindung auch bei Kurvenfahrten sehr gut beherrschbar und es ist nicht erforderlich, das Fahrzeug vor Kurven übermäßig abzubremsen. In diesem Zusammenhang wird ferner vorgeschlagen, die Steuerkopfgelenkanordnung vor der Achse der Hauptlaufräder anzuordnen, so daß ein Nachlauf der Hauptlaufräder gegenüber der Steuerachse gegeben ist, d. h., daß sich die Steuerachse und eine senkrecht auf der als eben vorausgesetzten Standfläche des Lastentransportfahrzeuges stehenden und die Achse der Hauptlaufräder schneidenden Vergleichslinie nicht im Bereich des Raddurchmessers der Hauptlaufräder schneiden. Diese Maßnahme trägt zur Verbesserung des Lenkverhaltens des Lastentransportfahrzeugs bei.

Gemäß einer weiteren bevorzugten Ausführungsform der Erfindung weist die Lenkbetätigungsvorrichtung zwei in seitlichem Abstand voneinander angeordnete Lenksäulenabschnitte mit davon abgewinkelten und Betätigungsgriffe aufweisenden Griffabschnitten, wobei die Lenksäulenabschnitte um ihre Längsachse drehbar und in -insbesondere beliebigen- Drehstellungen arretierbar sind, um die Griffposition wahlweise einzustellen. Vorzugsweise sind die Lenksäulenabschnitte zwecks wahlweiser Einstellung der Griffhöhe ferner teleskopisch verstellbar angeordnet. Die Lenkbetätigungsvorrichtung ist somit sehr vielseitig einstellbar, damit für unterschiedliche Fahrer die jeweils günstigste Lenkerbetätigungsposition gewählt und somit ein hoher Fahrkomfort realisiert werden kann. Gemäß einer Variante der Lenkbetätigungsvorrichtung sind die Griffabschnitte im wesentlichen U-förmig ausgebildet. Der von dem Antriebsteil abgekoppelte Lastenträgeraufbau kann damit bei Bedarf z. B. bequem nach Art einer Sackkarre geschoben werden.

Die Erfindung wird nachstehend anhand der Zeichnungen näher erläutert. Es zeigen:
- Fig. 1: ein teils schematische Seitenansicht eines Ausführungsbeispiels der Erfindung in einem ersten Fahrbetriebszustand mit am Boden abgestütztem vorderen Gelenkstützlaufrad, wobei - wie auch in allen weiteren Figuren- zur besseren Erkennbarkeit von Details das in Fahrtrichtung gesehen rechte Hauptlaufrad des Lastenträgerteils nicht eingezeichnet ist,
- Fig. 2: eine teils schematische Seitenansicht des in Fig. 1 dargestellten Lastentransportfahrzeugs nach der Erfindung in einem zweiten Fahrbetriebszustand mit in einer Kippstellung fixiertem Lastenträgeraufbau,
- Fig. 3: eine Seitenansicht des von dem Antriebsteil abgekoppelten Lastenträgerteils des Lastentransportfahrzeugs nach Fig. 1 und 2,
- Fig. 4 bis 6: teils schematische Seitenansichten verschiedener Varianten von Lastentransportfahrzeugen nach der Erfindung.

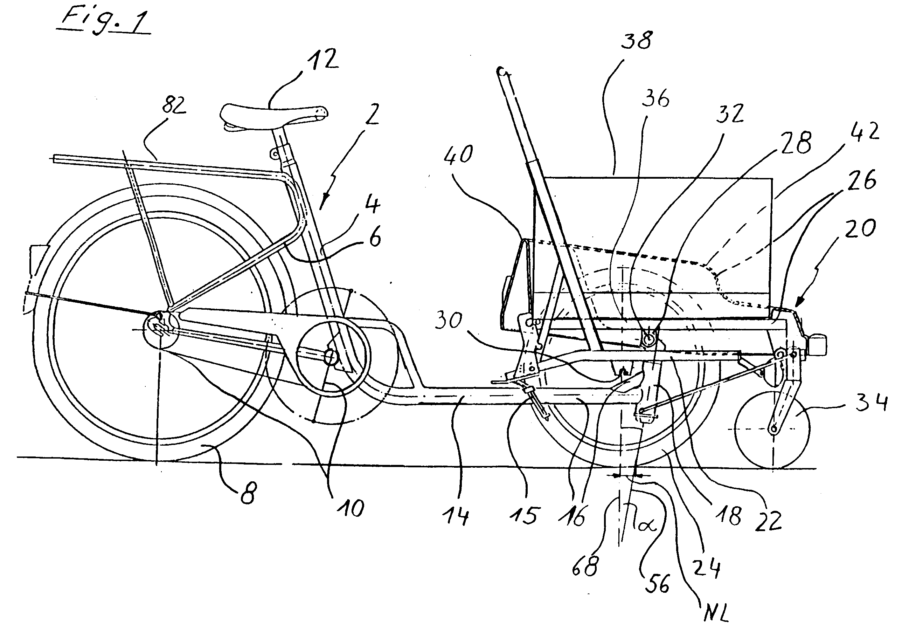

Bei dem in Fig. 1 gezeigten Lastentransportfahrzeug nach der Erfindung handelt es sich um ein vierrädriges Lastentransportfahrrad. Das Lastentransportfahrrad umfaßt einen hinteren Antriebsteil 2, der im wesentlichen dem Antriebsteil eines üblichen Zweiradfahrrades entspricht und unter anderem einen Rahmen 4 mit einer Gabelanordnung 6 zur Aufnahme des Antriebsrades 8, einen über eine Tretkurbel angetriebenen Kettenantriebsmechanismus 10 und einen von dem Rahmen 4 getragegenen Sattel 12 aufweist. Der Rahmen 4 hat ein vergleichsweise stabil ausgelegtes Unterrohr 14, das sich in Fahrtrichtung nach vorn erstreckt und über ein Scharnier 15 oder einer anderen geeigneten betriebsmäßig lösbaren Verbindung trennbar mit einem Verbindungsgestänge 16 verbunden ist, welches über eine Steuerkopfgelenkvorrichtung 18 mit einem vorderen Lastenträgerteil 20 des Lastentransportfahrzeugs gekoppelt ist.

Der Lastenträgerteil 20 hat ein über die Steuerkopfgelenkvorrichtung 18 schwenkbeweglich mit dem Verbindungsgestänge 16 verbundenes Fahrgestell 22, an dem zwei koaxiale Hauptlaufräder 24 drehbeweglich angeordnet sind. In den Figuren ist das in Fahrtrichtung gesehen rechte Hauptlaufrad nicht eingezeichnet, um andere Details besser erkennbar werden zu lassen.

Der Lastenträgerteil 20 umfaßt ferner einen Lastenträgeraufbau 26 zur Aufnahme von Transportgütern. Der Lastenträgeraufbau 26 ist mittels eines am oberen Ende der Steuerkopfgelenkvorrichtung 18 angeordneten Quergelenks 28 relativ zu dem Fahrgestell 22 um eine im wesentlichen parallel zur Achse 30 der Hauptlaufräder 24 liegende Kippachse 32 schwenkbeweglich gelagert und weist an seinem vorderen Ende ein Stützlaufrad 34 auf, über das er sich zusätzlich am Boden abstützen kann, so daß eine -insbesondere beim Transport vergleichsweise schwerer Transportgüter bedeutsame- günstige Gewichtsverteilung auf die Hauptlaufräder 24 und das Stützlaufrad 34 realisiert werden kann. Das Stützlaufrad kann aufgrund der schwenkbaren Lagerung des Lastenträgeraufbaus 26 Bodenunebenheiten folgen, wodurch Stöße wenigstens teilweise absorbiert werden. Das Fahrzeug bleibt aufgrund der beschriebenen Konstruktion auch unter Belastung durch Transportgüter gut beherrschbar und lenkbar.

Der Lastenträgeraufbau 26 hat eine Plattform 36 zur Aufnahme von Transportgütern, beispielsweise einer Kiste 38, und einen in den Figuren 1 bis 3 in einem Längsschnitt gezeigten Rahmen 40, der an der Plattform 36 Seitenwände 42 zur seitlichen Fixierung des Transportgutes 38 vorsieht.

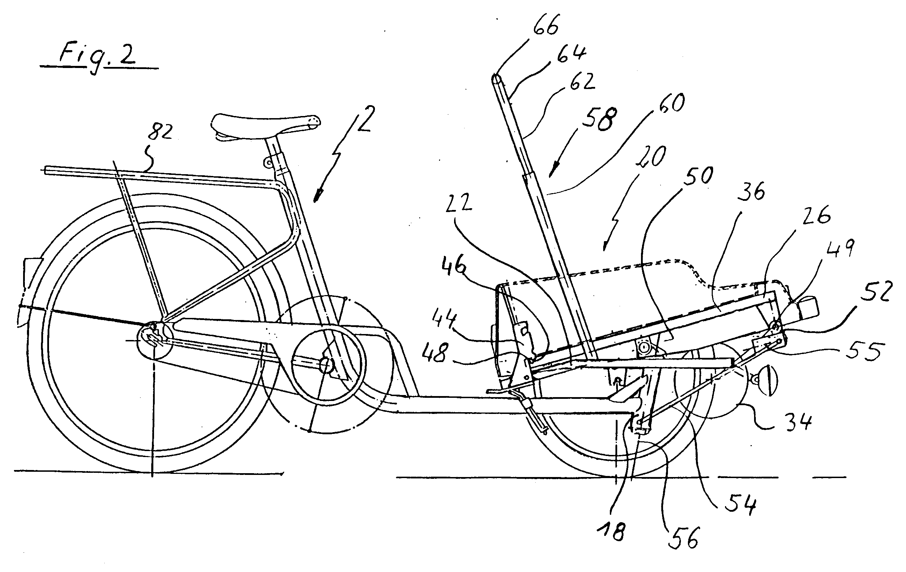

Wie aus Fig. 2 zu erkennen ist, kann der Lastenträgeraufbau 26 in einer Kippstellung fixiert werden, in der das Stützlaufrad 34 vom Boden abgehoben ist. Die Fixierung erfolgt durch wenigstens ein schwenkbar an dem Fahrgestell 22 angeordnetes Verrastungselement 44, das in der in Fig. 2 gezeigten Stellung einen von dem Lastenträgeraufbau 26 seitlich abstehenden Verrastungsstift 46 übergreift und in einer Kerbung 48 aufnimmt, so daß der Lastenträgeraufbau 26 sicher mit dem Fahrgestell 22 verriegelt ist. Das Verrastungselement 44 ist auf einfache Weise durch einen Hebelmechanismus manuell betätigbar, so daß die in Fig. 1 gezeigte Fahrbetriebsstellung oder die in Fig. 2 dargestellte Fahrbetriebsstellung nach Bedarf wählbar ist.

Die Stellung nach Fig. 2 ist insbesondere dann von Vorteil, wenn der Lastenträgerteil 26 unbelastet ist.

Wie ferner aus Fig. 2 zu erkennen ist, klappt das Stützlaufrad 34 um eine im wesentlichen horizontale Schwenkachse 49 herum in Richtung auf einen mittleren Bereich 50 des Lastenträgeraufbaus 26 hin ein, so daß es in der arretierten Kippstellung nicht über das vordere Ende des Fahrzeugs hinaus vorstehen kann. Zur Verstellung des Stützlaufrades 34 um die horizontale Schwenkachse 49 ist ein das Stütlaufrad 34 mit der Lastenträgerplattform 36 verbindendes Quergelenk 52 und wenigstens eine Pleuelstange 54 vorgesehen, die einerseits an der Steuerkopfgelenkvorrichtung 18 gehalten - und andererseits an der stützlaufradseitigen Seite des Quergelenks 52 angelenkt ist. Beim Übergang des Lastenträgeraufbaus 26 in die in Fig. 2 gezeigte Kippstellung zieht die Pleuelstange 54 somit das Stützlaufrad 34 in die eingeklappte Stellung. Bei der Freigabe des Lastenträgeraufbaus 26 aus der Kippstellung drückt die Pleuelstange 54 das Stützlaufrad 34 wieder in die Ausgangsstellung zurück.

Das Stützlaufrad 34 ist ferener schwenkbeweglich um eine quer zur Achse 49 liegende Achse 55 gehalten, damit es Richtungsänderungen des Fahrzeugs folgen kann.

Das Lastentransportfahrzeug wird gelenkt, indem der vordere Lastenträgerteil 20 um die von der Steuerkopfgelenkanordnung 18 festgelegte Steuerachse 56 relativ zu dem hinteren Antriebsteil 2 verschwenkt wird. Zu diesem Zweck ist eine Lenkbetätigungsvorrichtung 58 vorgesehen, die zwei in seitlichem Abstand voneinander angeordnete, teleskopisch verkürzbare bzw. verlängerbare Lenksäulen 60 aufweist, die an ihrem einen Ende mit dem Fahrgestell 22 verbunden sind und zwischen sich den Lastenträgeraufbau 26 aufnehmen.

Da die Lenksäulen 60 in den gezeigten Seitenansichten in einer Flucht hintereinanderliegen, ist jeweils nur eines erkennbar.

Ein jeweiliger oberer Lenksäulenabschnitt 62 der Lenksäulen 60 ist um seine Längsachse drehbar angeordnet und in beliebigen Drehstellungen fixierbar, so daß eine beliebige Winkeleinstellung eines von dem Lenksäulenabschnitt 62 abstehenden Griffabschnittes 64 mit einem daran angeordneten, vom Fahrersitz aus von dem Fahrer erreichbaren Griff 66 möglich ist.

Die Steuerkopfgelenkvorrichtung 18 ist derart angeordnet, daß die Steuerachse 56 in Fahrtrichtung nach vorn geneigt ausgerichtet ist (negative Steuerkopfeinstellung). Der in Fig. 1 eingezeichnete Winkel α zwischen der Steuerachse 56 und einer senkrecht auf der -hier zu Definitionszwecken- als eben vorausgesetzten Standfläche des Lastentransportfahrzeugs stehenden und durch die Achse 30 der Hauptlaufräder 24 verlaufenden Bezugsgeraden 68 beträgt etwa 10°. Darüberhinaus ist die Steuerkopfgelenkvorrichtung 18 in Fahrtrichtung gesehen vor der Achse 30 der Hauptlaufräder 24 derart angeordnet, daß sich die Steuerachse 56 und die Bezugsgerade 68 nicht im Bereich des Raddurchmessers schneiden, so daß ein Nachlauf NL der Hauptlaufräder 24 gegeben ist. Durch diese Maßnahmen wird die Steuerungsfähigkeit des Lastentransportfahrzeugs nach der Erfindung verbessert. Die negative Steuerkopfeinstellung bewirkt ferner, daß sich bei einer Kurvenfahrt der hintere Antriebsteil 2 zwangsläufig in eine gewünschte Kurveninnenlage neigt.

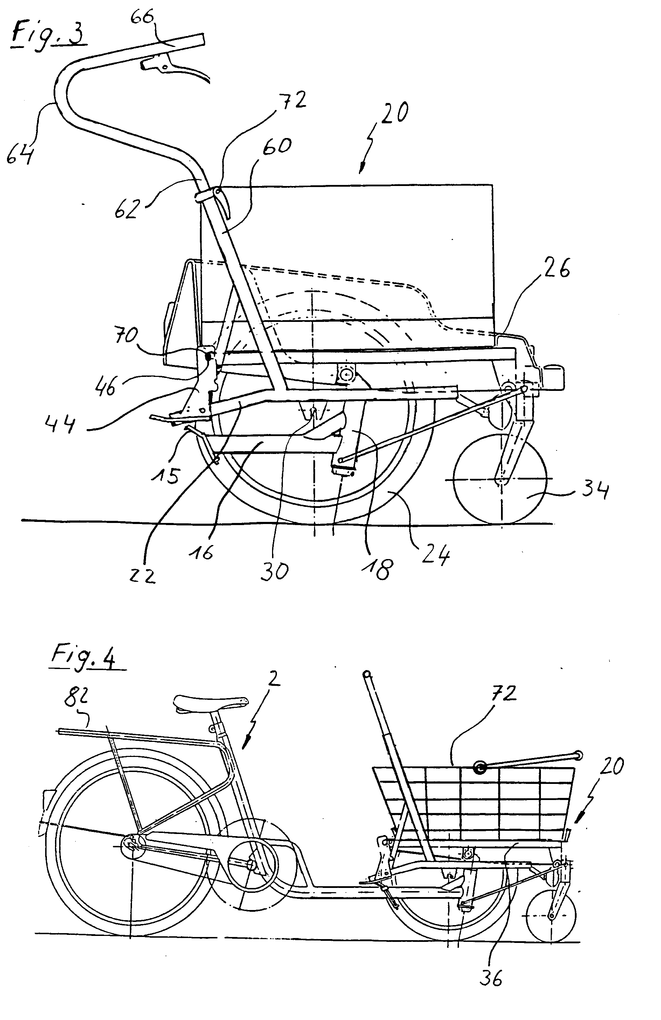

In Fig. 3 ist der Lastenträgerteil 20 des Lastentransportfahrrades nach den Fig. 1 und 2 im betriebsmäßig von dem Antriebsteil 2 abgekoppelten Zustand gezeigt. Die Abkopplung erfolgt auf einfache Weise mit wenigen Handgriffen, indem das Steckscharnier 15 gelöst wird. Das Verbindungsgestänge 16 und die Steuerkopfgelenkvorrichtung 18 verbleiben an dem Lastenträgerteil 20. Sie sind jedoch derart bemessen und angeordnet, daß sie beim Schieben des Lastenträgerteils 20 in keiner Weise stören.

In der in Fig. 3 gezeigten Wahlstellung ist der Lastenträgeraufbau 26 relativ zu dem Fahrgestell 22 in einer Stellung verrastet, in der er sich auch über das Stützlaufrad 34 am Boden abstützt. In dieser Stellung greift der Verrastungsstift 46 in eine obere Rastkerbe 70 des Verrastungselementes 44 ein, so daß eine sichere Verriegelung des Lastenträgeraufbaus 26 an dem Fahrgestell 22 vorliegt.

Die Griffabschnitte 64 sind in der Fig. 3 in einer gegenüber den Darstellungen in den anderen Figuren um 90° um die Achsen der Lenksäulen 60 gedrehten und mittels der Spannelemente 72 fixierten Position gezeigt. Aus dieser Darstellung ist erkennbar, daß die Griffabschnitte 64 im wesentlichen U-förmig ausgebildet sind. Die gezeigte Form und Einstellung der Griffabschnitte 64 erleichtert das manualle Schieben des Lastenträgerteils 20. Der Lastenträgerteil 20 kann so beispielsweise auch nach Art einer Sackkarre bewegt werden, wozu er um die Achse 30 der Hauptlaufräder 24 gekippt werden kann.

Fig. 4 zeigt eine Variante des vorstehend beschriebenen Lastentransportfahrrades nach der Erfindung. Der vordere Lastenträgerteil 20 ist dabei als von dem Antriebsteil 2 abkoppelbarer Einkaufswagen ausgestaltet und weist einen abnehmbar an der Lastenträgerplattform 36 fixierten Einkauskorb 72 auf.

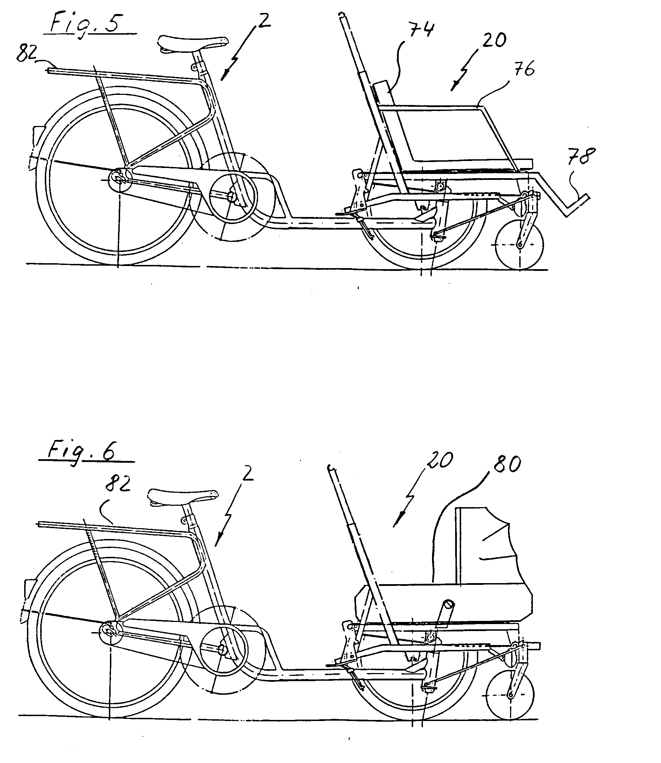

Fig 5 zeigt eine weitere Variante des Ausführungsbeispiels nach den Fig. 1 bis 3. Der vordere Lastenträgerteil 20 ist dabei als von dem Antriebsteil 2 abkoppelbarer Rollstuhl mit einem Sitz 74, Armlehnen 76 und einer Fußstütze 78 ausgestaltet.

Fig. 6 zeigt eine dritte Variante des Ausführungsbeispiels nach den Figuren 1 bis 3. Dabei ist der Lastenträgerteil 20 als von dem Antriebsteil 2 abkoppelbarer Kinderwagen mit einem abnehmbar fixierten Kinderwagenaufsatz 80 ausgestaltet.

Wie aus den gezeigten Beispielen zu ersehen ist, läßt sich das Lastentransportfahrzeug nach der Erfindung sehr vielfältig einsetzen.

Selbstverständlich kann der hintere Antriebsteil statt eines Pedalantriebes oder zusätzlich zu dem Pedalantrieb einen Antriebsmotor, beispielsweise einen Verbrennungsmotor oder einen Elektromotor, aufweisen.

Aus Verkehrssicherheitsgründen wird ferner eine zumindest auch auf die Hauptlaufräder wirkende Handbremse vorgeschlagen.

Wie aus sämtlichen Figuren zu ersehen ist, kann auch ein konventioneller Gepäckträger 82 an dem Antriebsteil 2 vorgesehen sein.

## Patentansprüche

1. Lastentransportfahrzeug, insbesondere Lastentransportfahrrad, mit
- einem hinteren Antriebsteil (2),
- der einen Rahmen (4),
- ein daran angeordnetes Antriebsrad (8),
- einen Antriebsmechanismus (10) für den Antrieb des Antriebsrades (8) und
- einen von dem Rahmen (4) getragenen Fahrersitz (12) aufweist,
- einem vorderen Lastenträgerteil (20), der
- ein Fahrgestell (22),
- zwei koaxial daran angeordnete Hauptlaufräder (24),
- eine vom Fahrersitz (12) aus vom Fahrer erreichbare Lenkbetätigungsvorrichtung (58) und
- einen Lastenträgeraufbau (26) zur Aufnahme des Transportgutes aufweist, welcher relativ zu dem Fahrgestell (22) um eine im wesentlichen parallel zur Achse der Hauptlaufräder (24) liegende Kippachse (28) schwenkbeweglich gelagert ist und wenigstens ein gegenüber der Achse der Hauptlaufräder (24) und gegenüber der Kippachse (28) in Fahrtrichtung versetzt angeordnetes und zwecks Anpassung an Fahrtrichtungsänderungen schwenkbar gelagertes Stützlaufrad (34) umfaßt, über das er sich zusätzlich am Boden abstützen kann, und mit
- einer Steuerkopfgelenkvorrichtung (18), die den vorderen Lastenträgerteil (20) mit dem hinteren Antriebsteil (2) derart verbindet, daß der vordere Lastenträgerteil (20) zwecks Lenkung des Lastentransportfahrzeugs um eine Steuerachse (56) schwenkbar ist.

2. Lastentransportfahrzeug nach Anspruch 1, wobei der vordere Lastenträgerteil (20) als abnehmbar mit dem hinteren Antriebsteil (2) gekoppelter und im abgekoppelten Zustand unabhängig von dem hinteren Antriebsteil (2) fahrbarer Wagen ausgebildet ist.

3. Lastentransportfahrzeug nach Anspruch 1 oder 2, wobei der Lastenträgeraufbau (26) in einer Kippstellung relativ zu dem Fahrgestell (22) verrastbar ist, in der das Stützlaufrad (34) vom Boden abgehoben ist.

4. Lastentransportfahrzeug nach Anspruch 3, wobei ein Mechanismus (52, 54) vorgesehen ist, der das Stützlaufrad (34) -insbesondere nach Maßgabe der Kippbewegung des Lastenträgeraufbaus (26) - um eine im wesentlichen horizontale Achse (49) in Richtung auf einen mittleren Bereich (50) des Lastenträgerteils (20) nach oben verschwenkt, wenn der Lastenträgeraufbau (26) in die Kippstellung bewegt wird, und der das Stützlaufrad (34) wieder in die Ausgangsstellung zurückbewegt, wenn der Lastenträgeraufbau (26) aus der Kippstellung herausbewegt wird.

5. Lastentransportfahrzeug nach wenigstens einem der vorhergehenden Ansprüche, wobei das Fahrgestell (22) des Lastenträgerteils (20) über eine Federung an den Hauptlaufrädern (24) abgestützt ist.

6. Lastentransportfahrzeug nach wenigstens einem der vorhergehenden Ansprüche, wobei der Lastenträgeraufbau (26) in einer Stellung verrastbar ist, in der er sich auch über das Stützlaufrad (34) am Boden abstützen kann.

7. Lastentransportfahrzeug nach wenigstens einem der vorhergehenden Ansprüche, wobei der Lastenträgeraufbau (26) eine Lastenträgerplattform (36) mit Lastensicherungselementen (42) umfaßt.

8. Lastentransportfahrzeug nach wenigstens einem der vorhergehenden Ansprüche, wobei der Lastenträgeraufbau (26) wenigstens einen Sitz (74) für eine zu transportierende Person aufweist.

9. Lastentransportfahrzeug nach wenigstens einem der vorhergehenden Ansprüche, wobei der Lastenträgeraufbau (26) einen -insbesondere abnehmbar fixierten- Kinderwagenaufsatz (80) umfaßt.

10. Lastentransportfahrzeug nach wenigstens einem der vorhergehenden Ansprüche, wobei der Lastenträgeraufbau einen -insbesondere abnehmbar fixierten- Einkaufskorb (72) umfaßt.

11. Lastentransportfahrzeug nach wenigstens einem der vorhergehenden Ansprüche, wobei die Steuerkopfgelenkvorrichtung (18) derart angeordnet ist, daß die Steuerachse (56) in Fahrtrichtung nach vorn geneigt ausgerichtet ist.

12. Lastentransportfahrzeug nach Anspruch 11, wobei die Steuerkopfgelenkvorrichtung (18) vor der Achse (30) der Hauptlaufräder (24) angeordnet ist, so daß ein Nachlauf der Hauptlaufräder (24) gegenüber der Steuerachse (56) gegeben ist.

13. Lastentransportfahrzeug nach wenigstens einem der vorhergehenden Ansprüche, wobei die Lenkbetätigungsvorrichtung (58) zwei in seitlichem Abstand voneinander angeordnete Lenksäulenabschnitte (62) mit davon abgewinkelten und Betätigungsgriffe (66) aufweisenden Griffabschnitten (64) umfaßt, wobei die Lenksäulenabschnitte (62) um ihre Längsachse drehbar und in -insbesondere beliebigen- Drehstellungen arretierbar sind, um die Griffposition wahlweise einzustellen.

14. Lastentransportfahrzeug nach Anspruch 13, wobei die Lenksäulenabschnitte (62) zwecks wahlweiser Einstellung der Griffhöhe teleskopisch verstellbar angeordnet sind.

15. Lastentransportfahrzeug nach Anspruch 13 oder 14, wobei die Griffabschnitte (62) im wesentlichen U-förmig ausgebildet sind.

## Claims

1. Load transport vehicle, especially load transport bicycle, with
- a rear drive part (2),
- which comprises a frame (4),
- a drive wheel (8) arranged thereat,
- a drive mechanism (10) for drive of the drive wheel (8) and
- a driver seat (12) supported by the frame (4),
- a front load carrier part (20), which comprises
- a chassis (22),
- two main wheels (24) coaxially arranged thereat,
- a steering actuating device (58) reachable from the driver seat (12) by the driver and
- a load carrier superstructure (26) for reception of transport goods, which is mounted to be pivotally movable relative to the chassis (22) about a tilt axis (28) running substantially parallel to the axis of the main wheels (24) and which comprises at least one support wheel (34), arranged offset in travel direction relative to the axis of the main wheels (24) and relative to the tilt axis (28) and mounted to be pivotable for the purpose of adaptation to changes in travel direction, by way of which the superstructure can additionally be supported on the ground, and with
- a control head steering device (18), which connects the front load carrier part with the rear drive part (2) in such a manner that the front load carrier part (20) is pivotable about a control axis (56) for the purpose of steering the load transport vehicle.

2. Load transport vehicle according to claim 1, wherein the front load carrier part (20) is constructed as a carriage which is removably coupled with the rear drive part (2) and which in the uncoupled state is movable independently of the rear drive part (2).

3. Load transport vehicle according to claim 1 or 2, wherein the load carrier superstructure (22) is detentable in a tilt setting relative to the chassis (22), in which the support wheel (34) is raised from the ground.

4. Load transport vehicle according to claim 3, wherein a mechanism (52, 54) is provided, which pivots the support wheel (34) upwardly - in particular in proportion to the tilt movement of the load carrier superstructure (26) - about a substantially horiziontal axis (49) in direction towards a middle region (50) of the load carrier part (20), when the load carrier superstructure (26) is moved into the tilt setting, and which moves the support wheel (34) back out into the initial setting when the load carrier superstructure (26) is moved out of the tilt setting.

5. Load transport vehicle according to at least one of the preceding claims, wherein the chassis (22) of the load carrier part (20) is supported on the main wheels (24) by way of a spring suspension.

6. Load transport vehicle according to at least one of the preceding claims, wherein the load carrier superstructure (26) can be detented in a setting in which it can also be supported on the ground by the support wheel (34).

7. Load transport vehicle according to at least one of the preceding claims, wherein the load carrier superstructure (26) comprises a load carrier platform (36) with load securing elements (42).

8. Load transport vehicle according to at least one of the preceding claims, wherein the load carrier superstructure (26) has at least one seat (74) for a person to be transported.

9. Load transport vehicle according to at least one of the preceding claims, wherein the load carrier superstructure (26) comprises a child carrier attachment (80), particularly one that is removably attached.

10. Load transport vehicle according to at least one of the preceding claims, wherein the load carrier superstructure comprises a shopping basket (72), particularly one that is removably attached.

11. Load transport vehicle according to at least one of the preceding claims, wherein the control head steering device (18) is arranged in such a manner that the control axis (56) is oriented to be inclined forwardly in travel direction.

12. Load transport vehicle according to claim 11, wherein the control head steering device (18) is arranged ahead of the axis (30) of the main wheels (24), so that a trailing of the main wheels (24) relative to the control axis (56) is given.

13. Load transport vehicle according to at least one of the preceding claims, wherein the steering actuating device (58) comprises two steering column portions (62), which are arranged at a lateral spacing from one another, with grip portions (64) angled relative thereto and having actuating grips (66), wherein the steering column portions (62) are rotatable about their longitudinal axis and lockable in rotational settings, particularly arbitrarily selectable settings, in order to selectably set the grip position.

14. Load transport device according to claim 13, wherein the steering column sections (62) are arranged to be telescopically adjustable for the purpose of selectable setting of the grip height.

15. Load transport vehicle according to claim 13 or 14, wherein the grip portions (62) are constructed to be substantially U-shaped.

## Revendications

1. Véhicule de transport de charge, en particulier bicyclette de transport de charge, avec
- une partie-entraînement (2) arrière, présentant
- un cadre (4),
- une roue motrice (8) fixée à celui-ci,
- un mécanisme d'entraînement (10) pour l'entraînement de la roue motrice (10) et,
- un siège conducteur (12) porté par le cadre (4),
- une partie support de charge (20) avant, présentant
- un bâti de roulage (22),
- deux roues principales (24) fixées à celui-ci coaxialement,
- un dispositif d'actionnement directionnel (58), pouvant être atteint par le conducteur depuis le siège conducteur (12), et
- une structure support de charge (26) destinée à recevoir le produit à transporter, montée avec une mobilité de pivotement par rapport au bâti de roulage (22), autour d'un axe de basculement (28) sensiblement parallèle à l'axe des roues principales (24), et comprenant au moins une roue d'appui (34) disposée décalée dans la direction de roulage, par rapport à l'axe des roues principales (24) et par rapport à l'axe de basculement (28), et montée de façon à pouvoir pivoter en vue d'une adaptation à des modifications de la direction de roulage, roue d'appui (24) par l'intermédiaire de laquelle la structure support de charge peut prendre un appui supplémentaire au sol, et comportant
- un dispositif articulé à tête de commande (18), reliant la partie support de charge (20) avant à la partie d'entraînement (2) arrière de manière que la partie support de charge (20) puisse pivoter autour d'un axe de commande (56), en vue de produire un guidage directionnel du véhicule de transport de charge.

2. Véhicule de transport de charge, selon la revendication 1, la partie support de charge (20) avant étant réalisée sous forme de chariot couplé de façon amovible à la partie entraînement (2) arrière et pouvant être déplacé, à l'état désaccouplé, indépendamment de la partie d'entraînement (2) arrière.

3. Véhicule de transport de charge selon la revendication 1 ou 2, la structure support de charge (26) pouvant être encliquetée par rapport au bâti de roulage (22) dans une position de basculement, dans laquelle la roue d'appui (34) est soulevée du sol.

4. Véhicule de transport de charge selon la revendication 3, un mécanisme (52, 54) étant prévu qui fait pivoter vers le haut la roue d'appui (34) - en particulier suivant l'ampleur du mouvement de basculement de la structure support de charge (26) - autour d'un axe (49) sensiblement horizontal, dans la direction d'une zone médiane (50) de la partie support de charge (20), lorsque la structure support de charge (26) est déplacée dans la position basculée, et ce mécanisme produisant le rappel en position initiale de la roue d'appui (24), lorsque la structure support de charge (26) est déplacée d'une façon lui faisant quitter la position basculée.

5. Véhicule de transport de charge selon au moins l'une des revendications précédentes, le bâti de roulage (22) de la partie support de charge (20) étant soutenu sur les roues principales (24) par l'intermédiaire d'une suspension.

6. Véhicule de transport de charge selon au moins l'une des revendications précédentes, la structure support de charge (26) étant encliquetable dans une position dans laquelle elle peut prendre appui au sol par l'intermédiaire de la roue d'appui (34).

7. Véhicule de transport de charge selon au moins l'une des revendications précédentes, la structure support de charge (26) comprenant une plate-forme support de charge (36) avec des éléments de sécurité de charge (42).

8. Véhicule de transport de charge selon au moins l'une des revendications précédentes, la structure support de charge (26) présentant au moins un siège (74) pour une personne à transporter.

9. Véhicule de transport de charge selon au moins l'une des revendications précédentes, la structure support de charge (26) comprenant une garniture de voiture d'enfant (80) - en particulier fixé d'une façon amovible-.

10. Véhicule de transport de charge selon au moins l'une des revendications précédentes, la structure support de charge comprenant un panier à achats (72) - en particulier fixé d'une façon amovible-.

11. Véhicule de transport de charge selon au moins l'une des revendications précédentes, le dispositif articulé à tête de commande (18) étant disposé de façon que l'axe de commande (56) soit orienté incliné vers l'avant dans la direction de déplacement.

12. Véhicule de transport de charge selon la revendication 11, le dispositif articulé à tête de commande (18) étant disposé devant l'axe (30) des roues principales (24), de sorte qu'une chasse des roues principales (24) soit produite, vis-à-vis de l'axe de commande (56).

13. Véhicule de transport de charge selon au moins l'une des revendications précédentes, le dispositif d'actionnement directionnel (58) comprenant deux sections de colonnes de direction (62) disposées à distance latérale l'une de l'autre, avec des sections de prise (64) orientées en faisant un angle donné et présentant des poignées d'actionnement (66), les sections de colonnes de direction (62) pouvant tourner autour de leur axe longitudinal et pouvant être bloquées en des positions de rotation - en particulier quelconques - pour régler à volonté la position de prise.

14. Véhicule de transport de charge selon la revendication 13, les sections de colonnes de direction (62) étant disposées réglables télescopiquement en vue de régler à volonté la hauteur de prise.

15. Véhicule de transport de charge selon la revendication 13 ou 14, les sections de prise (62) étant réalisées sensiblement en U.
